# FASCICULE DE BREVET EUROPEEN

(11) **EP 1 458 957 B1**
(45) Date de publication et mention de la délivrance du brevet: **22.02.2006**
(21) Numéro de dépôt: 02805800.6
(22) Date de dépôt: 19.12.2002
(51) Int. Cl.: F01N 1/08

(54) **DISPOSITIF DE DETENTE DE GAZ A SILENCIEUX**
SCHALLDÄMPFER GASEXPANSIONSVORRICHTUNG
SILENCER GAS EXPANDING DEVICE

(30) Priorité: 27.12.2001 FR 0116932
(43) Date de publication de la demande: 22.09.2004
(73) Titulaire: Societe d'Acoustique Industrielle, 91882 Massy Cedex (FR)
(72) Inventeur: GERARD, Philippe, Grégoire, F-78113 Adainville (FR)
(74) Mandataire: Bérogin, Francis
(86) Numéro de dépôt international: PCT/FR2002/004457
(87) Numéro de publication internationale: WO 2003/056148

(56) Documents cités:
- GB-A- 1 237 570
- GB-A- 1 432 048
- GB-A- 2 045 861
- US-A- 4 082 160
- US-A- 6 089 346

## Description

La présente invention concerne un dispositif de détente d'un gaz comprimé, du type comportant un tube d'amenée du gaz à détendre, une enveloppe allongée contenant une garniture d'un matériau d'amortissement acoustique tel qu'un tricot métallique ou analogue, une extrémité de cette enveloppe allongée communiquant avec ledit tube d'amenée par une série de trous, et son extrémité opposée s'ouvrant latéralement à l'extérieur par une série d'ouvertures d'échappement du gaz détendu, la surface cumulée de ces ouvertures étant notablement supérieure à celle desdits trous, de sorte que ledit gaz traverse ces derniers à vitesse sonique et que sa vitesse en amont de son entrée soit maintenue à un niveau subsonique, de même qu'à l'intérieur de l'enveloppe.

Des dispositifs de détente de ce type, se présentant sous la forme de diffuseurs régulièrement répartis sur des rampes de distribution, sont déjà connus et sont utilisés par exemple pour détendre de l'air comprimé chaud avant son injection à l'entrée d'une machine telle qu'une turbine à gaz ou un compresseur, pour empêcher le givrage à l'entrée de la machine, par exemple au niveau du filtre d'entrée d'air. Leur constitution est telle qu'ils limitent de façon très importante les émissions sonores qui autrement seraient provoquées par la détente brutale du gaz sous pression, qu'il s'agisse d'air, de vapeur ou de CO₂, selon les applications..

Un dispositif de détente de ce type est décrit par exemple dans le document US 4 082 160 A.

Il est évidemment souhaitable d'obtenir la formation la plus homogène possible, devant l'entrée de la machine, d'un rideau d'air chaud ou autre gaz détendu pour en optimiser les effets, mais on s'est rendu compte que cela était assez difficile à obtenir avec une série de diffuseurs individuels, du fait que des zones défavorisées subsistent toujours entre les zones d'action de ces diffuseurs, dont chacun est globalement circulaire.

Le but de la présente invention est d'éviter cet inconvénient et de rendre les dispositifs de détente du genre en question plus efficaces que les dispositifs du type défini plus haut, en rendant plus homogène le rideau de gaz détendu évacué à vitesse relativement réduite en sortie du dispositif.

A cet effet, un dispositif de détente conforme à l'invention est caractérisé en ce que ladite enveloppe allongée s'étend, en y étant fixée, sur toute la longueur dudit tube en étant fermée à son extrémité opposée à celle par laquelle y entre le gaz à détendre, et en ce que ladite série d'ouvertures permettant l'échappement du gaz détendu à l'extérieur est prévue latéralement de chaque côté de l'enveloppe, sans interruption et sur toute sa longueur, à proximité de l'extrémité opposée à celle par laquelle elle est fixée audit tube d'amenée.

Grâce à cette structure en forme de rampe, on peut créer deux rideaux homogènes de gaz détendu, s'étendant latéralement des deux côtés et sur toute la hauteur de l'enveloppe. En disposant de telles rampes parallèlement les unes aux autres avec l'écartement approprié devant une entrée de machine, on pourra ainsi couvrir toute la surface souhaitable par nappes successives, évitant de la sorte et facilement la création de zones défavorisées.

La fabrication d'un tel dispositif en forme de rampe sera aussi moins coûteuse que celle de la grande quantité de diffuseurs individuels qui seraient nécessaires pour couvrir une surface équivalente, cette fabrication pouvant être obtenue à partir de tôles découpées, percées et soudées ; on limite les opérations d'usinage à l'élaboration des trous dans le tube et à celle des ouvertures dans l'enveloppe, celle-ci pouvant être fixée au tube par une simple opération de soudage.

Un mode d'exécution de l'invention va maintenant être décrit à titre d'exemple nullement limitatif avec référence aux figures du dessin ci-annexé dans lequel :

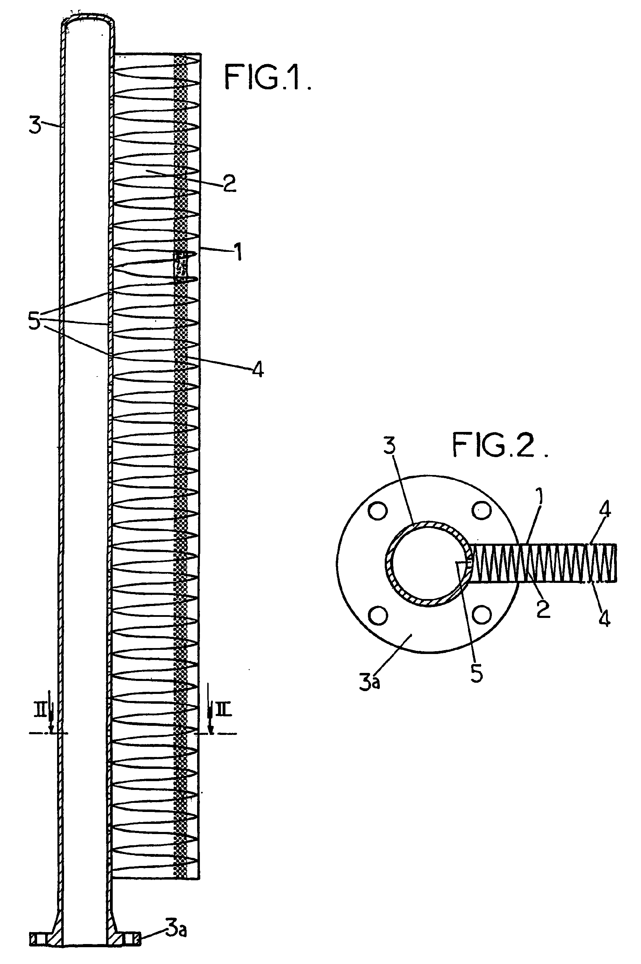

- la figure 1 est une vue en coupe verticale et axiale d'un dispositif de détente de gaz comprimé conforme à l'invention ; et
- la figure 2 est une vue en coupe horizontale de ce dispositif selon la ligne II-II de la figure 1.

Sur les figures, on a référencé en 1 l'enveloppe contenant la garniture de matériau d'amortissement acoustique 2, constituée par exemple d'un tissu métallique comprimé remplissant cette enveloppe, laquelle peut avoir avantageusement la forme d'un boîtier parallélépipédique en tôle soudée. Sur chacune de ses deux faces latérales, l'enveloppe 1 est pourvue, à proximité de l'extrémité opposée à celle par laquelle elle est fixée par soudage le long d'un tube d'amenée 3, d'une série d'ouvertures d'échappement 4 réparties uniformément, avantageusement en quinconce sur toute la hauteur de l'enveloppe. Par exemple, on prévoit que la section cumulée des ouvertures 4 est telle, en fonction du débit d'entrée du gaz à détendre, que la vitesse de sortie du gaz détendu soit inférieure à 50 m/s, ce qui évitera toute régénération de bruits importants.

Le gaz sortant du tube vertical 3, lequel est pourvu d'une embase de fixation 3a, pénètre dans l'enveloppe 1 par une série de trous 5 de faible diamètre, qui peuvent aussi, mais pas obligatoirement, être uniformément répartis sur toute la hauteur du tube et donc de l'enveloppe. La section cumulée de ces trous est telle que l'écoulement du gaz qui les traverse soit sonique, pour devenir subsonique dans l'enveloppe 1 ainsi qu'à sa sortie, la pression dans le tube d'amenée 3 pouvant être par exemple de 6 ou 7 bars ou plus, avec une vitesse d'écoulement également subsonique.

Le col sonique constitué par l'ensemble des trous 5 permet de décaler vers les très hautes fréquences, plus faciles à traiter acoustiquement, le spectre basse fréquence du jet d'entrée, les de choc étant "cassées" par le tricot métallique comprimé sur les ouvertures 4 de l'enveloppe, et l'écoulement du gaz y étant ainsi stabilisé et rendu moins bruyant. A la sortie, l'écoulement gazeux, homogène et à vitesse réduite, permet de limiter les disparités dans la directivité du bruit. Le faible diamètre des trous d'échappement (< 5mm) est essentiel, car il permet de limiter au maximum les risques liés au "défibrage" du tricot métallique, c'est-à-dire à l'arrachage de ses fibres.

Grâce à l'ensemble de ces dispositions, on obtient un dispositif de détente silencieux à encombrement relativement faible, facile à fabriquer avec des éléments métalliques du commerce découpés et soudés, et pratiquement sans usinage, donc à faible coût. On obtient une atténuation du bruit de l'ordre de 20 à 45 dbA par rapport à un échappement libre, et ceci pour un débit de gaz éventuellement chaud pouvant aller jusqu'à 3 t/h.

On comprend par ailleurs qu'en disposant de telles rampes parallèlement les unes aux autres avec les écartements appropriés, on pourra couvrir de façon homogène une grande surface de balayage de gaz chaud détendu avec un faible bruit.

Il est à noter que le tube 3 et son embase 3a pourraient préexister, l'invention consistant alors à percer ce tube d'une série de trous 5 et à y souder l'enveloppe 1. On peut aussi obtenir une répartition des débits non uniforme à la sortie de l'enveloppe, par exemple en élargissant vers une de ses extrémités la zone pourvue des ouvertures de sortie.

## Revendications

1. Dispositif de détente d'un gaz comprimé, du type comportant un tube (3) d'amenée du gaz à détendre, une enveloppe allongée (1) contenant une garniture (2) d'un matériau d'amortissement acoustique tel qu'un tricot métallique ou analogue, une extrémité de cette enveloppe allongée (1) communiquant avec ledit tube d'amenée (3) par une série de trous (5), et son extrémité opposée s'ouvrant latéralement à l'extérieur par une série d'ouvertures (4) d'échappement du gaz détendu, la surface cumulée de ces ouvertures (4) étant notablement supérieure à celle desdits trous (5), de sorte que ledit gaz traverse ces derniers à vitesse sonique et que sa vitesse en amont de son entrée soit maintenue à un niveau subsonique de même qu'à l'intérieur de l'enveloppe, **caractérisé en ce que** ladite enveloppe allongée (1) s'étend, en y étant fixée, sur toute la longueur dudit tube (3) en étant fermée à son extrémité opposée à celle par laquelle y entre le gaz à détendre, et **en ce que** ladite série d'ouvertures (4) permettant l'échappement du gaz détendu à l'extérieur est prévue latéralement de chaque côté de l'enveloppe (1), sans interruption et sur toute sa hauteur, à proximité de l'extrémité opposée à celle par laquelle elle est fixée audit tube d'amenée (3).

2. Dispositif selon la revendication 1, **caractérisé en ce que** l'enveloppe (1) a la forme d'un boîtier parallélépipédique soudé sur toute sa hauteur audit tube d'amenée (3) du gaz à détendre.

## Claims

1. Compressed-gas expanding device of the type comprising a feed tube (3) supplying the gas to be expanded, an elongated casing (1) containing a packing (2) of acoustic damping material such as metal knit or the like, one end of this elongated casing (1) communicating with the said feed tube (3) via a series of holes (5), and its opposite end opening laterally to the exterior via a series of discharge openings (4) for the expanded gas, the cumulated area of these openings (4) being considerably greater than that of the said holes (5), so that the said gas passes through the latter at sonic velocity and its velocity upstream of its inlet, as also inside the casing, is kept at a subsonic level, **characterized in that** the said elongated casing (1) extends along, and is fixed to, the said tube (3) over its entire length, and is closed at the end opposite the end through which the gas to be expanded is admitted; and **in that** the said series of openings (4) allowing the expanded gas to be discharged to the exterior is provided laterally on either side of the casing (1) without interruption and over its entire height, near the end opposite to the end by which it is fixed to the said feed tube (3).

2. Device according to Claim 1, **characterized in that** the casing (1) is in the form of a rectangular box welded over its entire height to the said feed tube (3) for the gas to be expanded.

## Patentansprüche

1. Vorrichtung zur Expansion eines Druckgases, von der Art mit einem Rohr (3) zum Zuführen des zu expandierenden Gases, einem länglichen Behältnis (1), das eine Dichtung (2) aus einem schalldämpfenden Material enthält, zum Beispiel ein Metallgewirk oder ähnliches, wobei ein Ende des länglichen Behältnisses (1) über eine Reihe von Löchern (5) mit dem Zuleitungsrohr (3) kommuniziert und sich das entgegengesetzte Ende mittels einer Reihe von Öffnungen (4) zum Ausströmen des expandierten Gases seitlich nach außen öffnet, wobei die Gesamtfläche dieser Öffnungen (4) erheblich größer ist als die der Löcher (5), so dass das Gas Letztere mit Schallgeschwindigkeit durchquert und seine Geschwindigkeit vor seinem Eintritt ebenso wie im Inneren des Behältnisses auf einem Unterschallniveau gehalten wird,
**dadurch gekennzeichnet, dass** sich das längliche Behältnis (1) über die gesamte Länge des Rohrs (3) erstreckt und daran befestigt ist, wobei es an dem Ende geschlossen ist, das demjenigen entgegengesetzt ist, an dem das zu expandierende Gas eintritt, und dass die Reihe von Öffnungen (4), die das Ausströmen des expandierten Gases nach außen gestatten, seitlich auf jeder Seite des Behältnisses (1) ohne Unterbrechung und über dessen gesamte Höhe in der Nähe des Endes vorgesehen ist, das demjenigen entgegengesetzt ist, mit dem es an dem Zuleitungsrohr (3) befestigt ist.

2. Vorrichtung nach Anspruch 1,
**dadurch gekennzeichnet, dass** das Behältnis (1) die Form eines parallelepipedischen Gehäuses hat, das über seine gesamte Höhe an das Rohr (3) zum Zuführen des zu expandierenden Gases angeschweißt ist.
